# EUROPEAN PATENT SPECIFICATION

(11) **EP 3 668 718 B1**
(45) Date of publication and mention of the grant of the patent: **01.01.2025**
(21) Application number: 18845521.6
(22) Date of filing: 14.08.2018
(51) Int. Cl.: B41M 3/14, B65D 33/34, G06K 7/12, G07D 7/14, G07D 7/12, G07D 11/225

(54) **TAMPER-EVIDENT ADHESIVES, SEALS, AND CONTAINERS**
MANIPULATIONSSICHERE KLEBSTOFFE, DICHTUNGEN UND BEHÄLTER
CONTENANTS, JOINTS ET ADHÉSIFS INVIOLABLES

(30) Priority: 17.08.2017 US 201762546811 P
(43) Date of publication of application: 24.06.2020
(73) Proprietor: Sun Chemical Corporation, Parsippany, NJ 07054 (US)
(72) Inventor: WEISBECKER, Carl, S., Carlstadt , NJ 07072 (US); FARAHAT, Mohammad, Wyckoff NJ 07481 (US); DJAMBAZOVA, Katerina, Eagle CO 81631 (US); DESHAZER, David, Verona, NJ 07044 (US)
(74) Representative: Carpmaels & Ransford LLP
(86) International application number: PCT/US2018/046607
(87) International publication number: WO 2019/036411

(56) References cited:
- WO-A2-2017/112507
- GB-A- 2 016 370
- JP-A- H10 250 214
- US-A- 4 500 116
- US-A- 5 605 738
- US-A- 5 605 738
- US-A- 5 869 160
- US-A- 6 048 098
- US-A1- 2004 000 787
- US-A1- 2006 234 014
- US-A1- 2016 144 650
- US-A1- 2017 168 037
- US-B2- 7 631 776

## Description

The present application claims priority to U.S. Provisional Patent Application Serial No. 62/546,811 filed August 17, 2017.

### FIELD OF THE INVENTION

The invention disclosed herein is directed to security measures useful in determining whether a sealable article that has been sealed closed with an adhesive sealing composition has been tampered with.

### BACKGROUND OF THE INVENTION

Secure containers are used in many different industries for holding, securing, transporting, and/or protecting valuable items. For example, a retail store may use a secure container or envelope to transport cash to a bank for deposit. Other items of value shipped in secure containers include checks, bonds, stocks, food stamps, coupons, medical reports, prescription drugs, works of art, items of value because they are rare or one of a kind (e.g., old first edition books, instruments once owned by a famous musicians, rare baseball cards), samples, jewelry, and confidential documents. Accordingly, there is a continuous need for secure containers, and for technical innovations that relate to keeping the items that are placed inside them secure, free from theft, and/or recoverable should theft occur.

When items of value are involved, safeguards need to be taken to be sure that thieves cannot steal secure containers. Computer-implemented inventory control, such as one in which the secure container is tagged with a bar code or RFID tag and is scanned throughout a custody chain could thwart outright container theft. However, the enterprising criminal could attempt to steal the container contents in another way, such as for example, tampering with the seal on the container and then removing all or part of the container contents.

Tamper-evident containers have been provided with a means of revealing criminal, intentional, inadvertent and/or malicious ingress into the container have been described. Exemplary references include US 8,083,089, US 2007/0045317, EP 0443750, US 6,428,867, US 7,095,324, EP 0 183 489, US 4,483,018. WO 96/04177, US 5,319,475, WO 2005/039869, US 4,986,429, and US 4,457,430.

There are numerous examples in the art of solvent sensitive inks, such as fugitive inks that visibly discolor, fade, bleed, or change color when exposed to aqueous solutions or solvents, and such types of inks are known to provide visible evidence of tampering of packages or secure documents.

Methods of tampering to open an adhesive seal include the application of force or shear to separate an adhesive bond, and the application of heat or cold to alter mechanical properties of the adhesive seal material and/or the container material to which adhesive is bonded. Another tampering method includes chemically attacking the adhesive seal material with a solvent in order to dissolve the adhesive material and open the package.

Security seals that provide evidence of tampering generally do so by providing overt evidence. That is, the overt evidence of tampering is plainly visible to all by naked eye observation under visible light. In other words, overt evidence is detectable to those who have an interest in thwarting and preventing theft and also to the criminal who is tampering. The person who tampers with a package that displays overt evidence of tampering, such as tearing, distorting, weakening, perforating, fracturing, or destructing, and/or changing color when the seal is opened, will clearly recognize that the tampering effort will be known to all. The tamperer will also know that the tampering attempt will be investigated. The tamperer may respond by hiding the evidence and/or taking other precautions to avoid being identified.

In that regard, perhaps the tamperer could replace the tampered-with container in which the security seal has been broken and the stored contents removed (entirely or in part) with an untampered-with container that is empty or which contains fake replacement contents. This could allow the tamperer sufficient time to get away and avoid apprehension before the criminal act was discovered.

A tamper-evident seal that changes color, bleeds, fades, or reveals some overt visual tampering evidence may not be desirable for the above-stated reasons. It might be preferable to provide evidence of tampering in a way that only those who have an interest in preventing or thwarting tampering are able to detect and learn about the tampering attempt. Document US2017/168037A1 discloses the use of an aggregation-induced emission (AIE) fluorophore and a solvent to reveal physical damage to the composition, by investigating emitted light.

### SUMMARY OF THE INVENTION

In view of the above, it would be advantageous to supply containers, envelopes, enclosures and the like with security seals that provide covert evidence of tampering. If the evidence is covert, then only persons with a legitimate interest in the containers and/or articles inside them would know if the container seal has been tampered with. Since the tamperer would not know that the evidence of tampering is covertly detectable (and has been so detected), an investigation into the tampering could proceed without the tamperer knowing about it. This could lead to a rapid apprehension of the tamperer and/or recovery of stolen goods. The invention is defined according to the scope of the appended claims.

In one aspect, the present invention is directed to an adhesive sealing material according to claim 1 that provides covert indication (e.g., covertly reveals) that a seal including the adhesive sealing material has been tampered with. The adhesive sealing material includes an adhesive and a composition that includes a covert tamper evidencing agent and a resin carrier for the covert tamper evidencing agent, wherein the composition is mixed into the adhesive.

In another aspect, the present invention is directed to a sealable article according to claim 8 for holding, securing, transporting, and/or protecting an item. The sealable article includes an enclosure having an opening and an adhesive sealing material that provides covert indication that a seal including the adhesive sealing material has been tampered with. The adhesive sealing material includes an adhesive and a composition that includes a covert tamper evidencing agent and a resin carrier for the covert tamper evidencing agent, wherein the composition is mixed into the adhesive. The adhesive sealing material is located in the opening of the enclosure, in order to provide a seal over the opening in order to maintain the item within the sealable article so that it is inaccessible from outside the sealable article.

In another aspect, the present invention is directed to a method according to claim 10 for determining whether a seal of a sealed article has been tampered with, comprising the steps of exciting a covert tamper evidencing agent that is in a seal of a sealed article to emit light, the exciting comprising exposing the seal to UV light, and inspecting the light emitted by the exposed seal for one or more indications that the sealed article has been tampered with. The seal is comprised of an adhesive sealing material that includes an adhesive and a composition that includes the covert tamper evidencing agent and a resin carrier for the covert tamper evidencing agent, wherein the composition is mixed into the adhesive.

### BRIEF DESCRIPTION OF THE FIGURES

The figures, which may not be to scale, are:
FIG. 1 is a cross-sectional view of an embodiment of a sealable article for securing an item which includes a tamper-evident adhesive seal in an unsealed state;
FIG. 2 is a cross-sectional view of a sealable article in a sealed state which contains a valuable item;
FIG. 3 is a cross-sectional view of sealable article as it is being tampered with;
FIG. 4 is a cross-sectional view of a sealable article in a sealed state as it is being inspected under UV light, the inspection revealing that the seal has not been tampered with; and
FIG. 5 is a cross-sectional view of a sealable article in a sealed state as it is being inspected under UV light, the inspection revealing that the seal has been tampered with.

### DETAILED DESCRIPTION OF THE INVENTION DEFINITIONS

As used herein, the use of the singular includes the plural unless specifically stated otherwise. For example, the singular forms "a," "an" and "the" are intended to include the plural forms, unless the context clearly indicates otherwise.

As used herein, the use of "or" means "and/or" unless stated otherwise.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the description or the claims, such terms are intended to be inclusive in a manner similar to the term "comprising."

As used herein, ranges and amounts may be expressed as "about" a particular value or range. "About" is intended to also include the exact amount. For example, "about 5 percent" means "about 5 percent" and also "5 percent." "About" means within typical experimental error for the application or purpose intended.

As used herein, the terms "polymer" and "polymers" includes homo- and co-polymers unless indicated otherwise.

Throughout this disclosure, all parts and percentages are by weight (wt% or mass% based on the total weight) and all temperatures are in °C unless otherwise indicated.

The tamper evidencing agents used in the compositions described herein are covert tamper evidencing agents. That is, they are not observable by unaided human sense or senses. For example, the tamper evidencing agents cannot be seen by the naked eye in the visible light region of the electromagnetic spectrum, and a detector is required in order to observe and/or inspect the tamper evidencing agents. When the tamper evidencing agents are not observable by unaided human sense, and/or inspection of the tamper evidencing agents can only be carried out with a detector, then the tamper evidencing agents are "covert tamper evidencing agents".

In one particular aspect, the covert tamper evidencing agents used in the compositions described herein are luminogenic materials that emit light in an aggregated state. These luminogenic materials cannot be observed by the naked eye (i.e., the unaided human sense) when exposed to light from the visible light region of the electromagnetic spectrum. On the other hand, when a detector is used, these covert tamper evidencing agents can be visually inspected, such as for example to determine if they have been tampered with.

The covert tamper evidencing agents described herein are observable when exposed to ultraviolet (UV) light from a UV light source. That is, when the covert tamper evidencing agents are exposed to UV light emitted by the source, an observer will see, with his or her eyes, the light emitted by the covert tamper evidencing agents. The detector, i.e., the UV light source, aids human vision and allows the observer to see the light emitted by the covert tamper evidencing agents.

In this manner, the covert tamper evidencing agents are able to "covertly reveal tampering". For example, and as explained below in additional detail, a covert tamper evidencing agent in a seal that seals an article will (1) be covertly observable under UV light and (2) covertly reveal evidence of tampering when the seal has been tamped with. Covert revelation are in the form of deficiencies or irregularities in the emitted light that are observable when the seal containing the covert tamper evidencing agent is viewed under UV light. Such deficiencies or irregularities may be in the form of discontinuities in the UV light emitted by the agent contained in the seal, and/or reduced luminescence in the regions of the seal where tampering has occurred. That is, whereas a non-tampered with seal would emit light continuously across the seal under UV exposure, the tampered-with seal would emit light discontinuously, have a region of reduced or no luminescence, and/or perhaps not emit light at all. Such discontinuities or absence of light emission would be the result of the tampering act.

In one aspect, when excited by a UV light source, the light emitted by the covert tamper evidencing agents used in the compositions described herein is in the visible light range of the electromagnetic spectrum, which as referred to herein, is light in the wavelength range of approximately 400 to 700 nm. The emitted light emitted by the covert tamper evidencing agents has a measurable luminescent intensity in the visible light spectrum.

In one aspect, the covert tamper evidencing agents become brightly luminescent under a UV light source only when they are present in an aggregated form. The covert tamper evidencing agents are preferably highly soluble in solvents that can be used to chemically attack and weaken the adhesive seal of a secure container in order to open the seal. The covert tamper evidencing agents dissolve in such solvents. When they dissolve, they lose their ability to luminescence.

The phrase "brightly luminescent under a UV lamp only when they are present in an aggregated form" means that the agents have measurable luminescent intensity in the visible light spectrum (within a wavelength range of approximately 400 to 700 nm) when in an aggregated state, and the luminescent intensity is at least ten-fold higher than the intensity of the agent when fully dissolved in solution. Preferably, luminescent substances used in this invention have luminescent intensity greater than fifty-fold higher when in an aggregated state versus when in solution.

In one aspect, the covert tamper evidencing agents are compounds that exhibit the property of aggregation-induced emission. Agents that exhibit aggregation-induced emission experience an enhancement of fluorescence when the agents are in an amorphous or crystalline (solid) state. On the other hand, these agents exhibit weak or almost no fluorescence in dilute solutions.

The covert tamper evidencing agents used in the adhesives described herein are poorly soluble in the adhesive but are soluble in solvents commonly used for adhesive seal tampering, such as for example aromatic hydrocarbons, terpenes, or ketones. These agents are brightly luminescent under a UV lamp only when they are present in an aggregated form, which is the case when they are mixed into a resin carrier plus adhesive or just into an adhesive. However, since these agents are soluble in common solvents that can be used to chemically attack and weaken the adhesive seal material in order to open the seal of a container, they will substantially lose their luminescence when the agents dissolve in the tampering solvent. Thus, in an example that is not claimed, the covert tamper evidencing agents are preferably organic non-polar aromatic hydrocarbon materials.

Exemplary covert tamper evidencing agents that are brightly luminescent in an aggregated state can be found among a class of luminogenic materials exhibiting the property of aggregation-induced emission (AIE). These luminogenic substances are also known as termed AIEgens (See Mei, J., et al., Aggregation-Induced Emission: The Whole Is More Brilliant than the Parts," Adv. Mater. 2014, 26, 5429-5479, and textbooks Aggregation-induced emission: fundamentals, B Zhong Tang and A Qin, eds., 2014, John Wiley & Sons. ISBN 9781118394304 and Aggregation-induced emission: applications, B Zhong Tang and A Qin, eds., 2013, John Wiley & Sons. ISBN 9781118701768).

The term "aggregation induced emission" or "AIE" as used herein refers to the phenomenon manifested by compounds exhibiting significant enhancement of their light-emission upon aggregation in the amorphous or crystalline (solid) states whereas they exhibit weak or almost no emission in dilute solutions. U.S. Patent No. 9,229,949 also provides several examples of aggregation-induced emission luminogens which are modified for use in metal ion detection.

For some compounds, the mechanism of AIE is understood to be related to the capability of some luminogenic molecules, when in dilute solution, to undergo dynamic intramolecular rotations of aromatic 'rotor' groups attached to a core 'stator' functional group. When the same molecules are in an aggregated state, such as when present in a poor solvent or in a solid form, they experience hindered rotation of the rotor groups due to stacking with neighboring molecules. The absence in the aggregate of rotational pathways to dissipate energy from an excited electronic state non-radiatively produces a greater quantum yield for radiative emission of light. This mechanism of AIE is often referred to as a "restriction of intramolecular rotations". See Hong Y., et al., Aggregation-Induced Emission, Chemical Society Reviews, 2011, 40, 5361-5388.

Many luminogenic materials do not exhibit AIE; instead, they exhibit a more performance characteristic that can be described as aggregation-induced fluorescence quenching. Materials that undergo fluorescence quenching typically have bright fluorescence or luminescence when prepared as a solution in a good solvent, but they display little or no fluorescence when prepared in a poor solvent with attendant aggregation or when illuminated in the solid phase. Aggregation-induced quenching is common among conventional luminophores that have a discotic aspect and extended planar π conjugation, such as aromatic hydrocarbons and derivatives.

In a further aspect, the aggregation induced emission material is a tetraphenylethylene (TPE) compound, or a derivative thereof. In an alternative further aspect, the aggregation induced emission material is a silole compound. In another alternative further aspect, the aggregation induced emission material is a luminogenic benzazole derivative. The benzazole derivative may be, for example, a luminogenic benoxazole derivative. LUNSAB2, available from LuminoChem, is an example of a luminogenic benoxazole derivative that is suitable for use in the present application. The benzazole derivative may also be a benzothiazole compound. Suitable luminogenic benzazole derivatives are described in WO2007/012905. A benzazole derivative suitable for use in the disclosed adhesive compositions may be N-[4-(benzo[d]oxazol-2-yl)phenyl]-4 tert-butylbenzamide. See Adv. Mater., 2014, 26, 5429-5479 (mentioned previously).

As indicated above, the covert tamper evidencing agent may be an aggregation induced emission material that is a tetraphenylethylene (TPE) compound or a derivative thereof. Examples of such compounds include 1,1,2,2-tetraphenylethylene and its derivatives such as, for example, 4,4'-bis(triphenylethenyl)-1,1'-biphenyl, 1,2-bis[4-(azidomethyl)phenyl]-1,2-diphenylethene, 1,2-bis[4-(bromomethyl)phenyl]-1,2-diphenylethene, 1,2-bis(4-methoxyphenyl)-1,2-diphenylethene, [(1,2-diphenylethene-1,2-diyl)bis(4,1-phenylene)]diboronic acid, 4,4'-(1,2-diphenylethene-1,2-diyl)dibenzoic acid, 4,4'-(1,2-diphenylethene-1,2-diyl)diphenol, 1-{4-[1,2-diphenyl-2-(*p*-tolyl)vinyl]phenyl}-1*H*-pyrrole-2,5-dione, 4,4',4",4"'-(ethene-1,1,2,2-tetrayl)tetraphenol, sodium 3,3'-{ [(1,2-diphenylethene-1,2-diyl)bis(4,1-phenylene)]bis(oxy)}bis(propane-1-sulfonate), and combinations thereof, including 1,1,2,2-tetraphenylethylene. These compounds are well-suited for inclusion in the inventions described herein. Most, if not all of these compounds can be obtained from Sigma-Aldrich. See, e.g., AIE Luminogens: A Family of New Malerials with Multifaceted Functionalities, 2018, web-accessible at https://www.sigmaaldrich.com/technical-documents/articles/bilogy/aie-luminogens.html#hps (last visited August 7, 2018).

1,1,2,2-tetraphenylethylene, which has a melting point of approximately 224° C, is shown below (compound (1)):

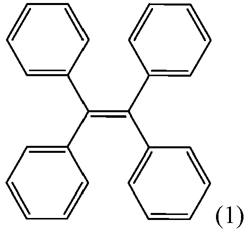

4,4'-bis(triphenylethenyl)-1,1 '-biphenyl (compound (2)) is shown below:

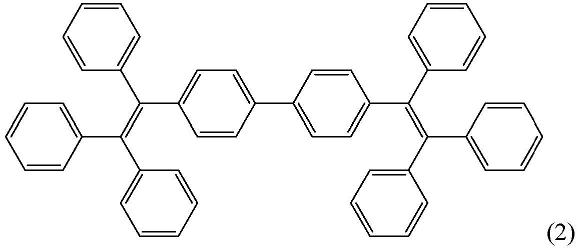

As indicated, silole compounds may be used as the covert tamper evidencing agent in the inventions described herein. An example of a silole compound that can be used as a covert tamper evidencing agent is 1,1,2,3,4,5-hexaphenyl-1H-silole (compound (3) below), which has a melting point in the range of 188-193 °C.

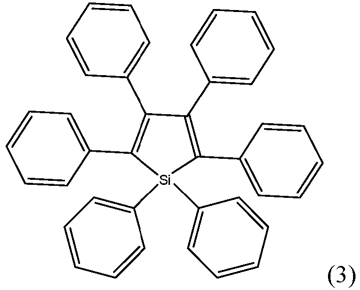

Another useful silole derivative is 2,5-bis[4-(azidomethyl)phenyl]-1,1-dimethyl-3,4-diphenyl-1*H*-silole.

In one aspect, the covert tamper evidencing agent is a compound selected from 10,10',11,11'-tetrahydro- bi-5H-dibenzo[a,d]cycloheptene and tris-(8-hydroxyquinoline)aluminum.

In an example not falling under the scope of the invention, the covert tamper evidencing agents are room temperature organic phosphors (RTOPs). RTOPs are compounds that phosphoresce at room temperature only when in a crystalline solid state. RTOPs may phosphoresce when dissolved in solution at temperatures far below room temperature; e.g., at a temperature for some of -196 °C or lower produces phosphorescence when the compounds are in solution.

Bright phosphorescence is a property that is rare among pure organic materials. Several factors contribute to enhance phosphorescence in organic crystals, including the presence of aromatic carbonyl groups, the presence of heavy atom substituents in the molecule (such as bromine or iodine,) the presence of halogen substituents. The individual molecules reside in a rigid matrix provided by the surrounding crystal structure to block alternative emission quenching pathways involving oxygen and other nonradiative-decay pathways.

Exemplary room temperature organic phosphor compounds that can be used in the examples not falling under the scope of this invention described herein include, but are not limited to 1-(dibenzo[b,d]furan-2-yl) phenylmethanone (BDBF), 1,4-phenylene bis(phenylmethanone) (pDBP), 1,3-phenylene bis(4-fluorophenyl)methanone (mFDBP), dibenzo[b,d]thiophen-2-yl (4-fluorophenyl)methanone (FBDBT), (9H-carbazol-9-yl)(4-chlorophenyl)methanone (CIBCZ), 2,5-dihexyloxy-4-bromobenzaldehyde, and combinations thereof. At least some of these compounds are discussed in Zhao, W. et al., Rational Molecular Design. for Achieving Persistent and Efficient Pure Organic RoomTemperature Phosphorescence, Chem 1, 592-602 (2016). Also see Ceroni, P., Design of Phosphorescent Organic Molecules: Old Concepts under a New Light, Chem 1, 524-526 (2016), and An, A. et al. Stabilizing Triplet Excited States for Ultralong Organic Phosphorescence, Nature Materials, 14, 685-690 (2015), and Bolton, O. et al., Activating Efficient Phosphorescence from Purely Organic Materials by Crystal Design, Nature Chemistry, 3, 205-210 (2011).

The room temperature organic phosphor 1-(dibenzo[b,d]furan-2-yl) phenylmethanone is shown below (compound (4)):

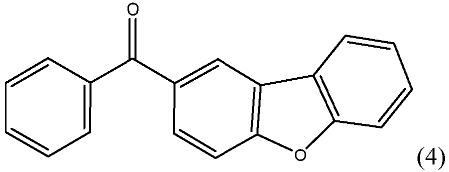

In one aspect of the compositions described herein, the covert tamper evidencing agents are mixed into resin carriers, and the resulting combination is then mixed into adhesive materials, such as pressure sensitive adhesives.

In an example not falling under the scope of this invention of the compositions, the covert tamper evidencing agents are mixed directly into adhesive materials, such as pressure sensitive adhesives, without a resin component, e.g., resin carrier, being present.

In one aspect, the resin carrier for the covert tamper evidencing agent comprises a material selected from a liquid rosin ester resin and a solid rosin ester resin. Other resins that are used as tackifiers in pressure sensitive adhesive formulations may also be used. Those resins include terpenes and modified terpenes, aliphatic, cycloaliphatic and aromatic resins, hydrogenated hydrocarbon resins, and their mixtures, or terpene-phenol resins.

In one aspect, the adhesive is a hot melt pressure sensitive adhesive. In another aspect, the adhesive and/or hot melt pressure sensitive adhesive is suitable for application to polyolefin or polyester packaging films. Pressure sensitive adhesives may contain an elastomeric polymer blended with a tackifier. The elastomers included in such blends may be, for example, acrylic polymers and copolymers, styrene butadiene copolymers (e.g., styrene-butadiene-styrene (SBS)), other styrene containing block copolymers (e.g., styrene-isoprene-styrene (SIS), styrene-(ethylene-butylene)-styrene (SEBS), and styrene-(ethylene-propylene)-styrene), styrene-ethylene/propylene (SEP), ethylene-vinyl acetate (EVA) copolymers, butyl rubber or natural rubber, nitriles, and silicone rubbers. The pressure sensitive adhesives may also contain a tackifier, which may be a petroleum hydrocarbon resin or a natural resin, such as rosin, a terpene, or derivatives of rosin. It may contain a plasticizer, such as a mineral oil. The adhesive may also contain antioxidants to minimize degradation during heating. Any resin materials that are used in pressure sensitive adhesive formulation could also be used as a resin carrier. Mixtures thereof can also be used.

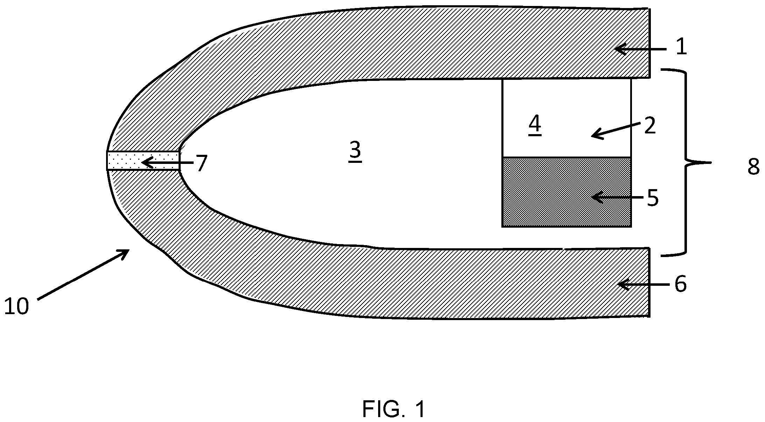

FIG. 1 depicts an embodiment of a sealable article 10 in accordance with the principles described herein. The sealable article comprises polymer films 1 and 6 that are heat sealed together on three sides to form an enclosable space 3 having an opening 8. The heat sealing forms a seam area 7 that extends around the three sealed sides.

The polymer films 1 and 6 may be polymer sheet material, such as, for example polyester film e.g., polyethylene terephthalate (PET) and/or polyolefin film (e.g., polyethylene, polypropylene). One or both of films 1 and 6 may be transparent. One or both of films 1 and 6 may be opaque.

One or both of films 1 and 6 may have other layers of material adhering to them, including printed inks and coatings that form text, logos, graphics, designs, etc. Such other layers may be applied to one or both of the exterior and interior film surfaces.

An adhesive strip 2 that includes an adhesive material and a covert tamper evidencing agent 4 (which is in a resin carrier) is applied to one of the polymer films 1 and 6. The adhesive strip extends across the width of the opening 8. FIG. 1 shows the adhesive strip 2 applied to polymer film 1, but it should be understood that the adhesive strip could be applied to polymer film 6.

A release film 5 is applied over the adhesive strip 2. The release film 5 may be a metallized film with a non-stick surface that easily peals from the surface of the adhesive. The release film prevents premature adhesion by the adhesive strip. Since the release film 5 is easily removable from the strip, it allows for exposure of the adhesive at a selected time, e.g., just after an item has been placed into the enclosure 3 and the time has come to seal the article. The sealable article is sealed by bringing the adhesive strip into contact with the polymer film opposite it (in this case, with film 6). Pressure is preferably applied in creating the seal. In this arrangement, an article placed in the enclosable space 3 is secured, thereby enclosing and sealing the space 3 of the sealable article 10.

The adhesive strip 2, when viewed under natural light, e.g., visible light, appears ordinary and unremarkable, in the sense that the covert tamper evidencing agent does not emit light in this situation. On the other hand, when viewed under a UV light source, bright luminescence is observed in the adhesive strip 2, due to the presence of the covert tamper evidencing agent 4.

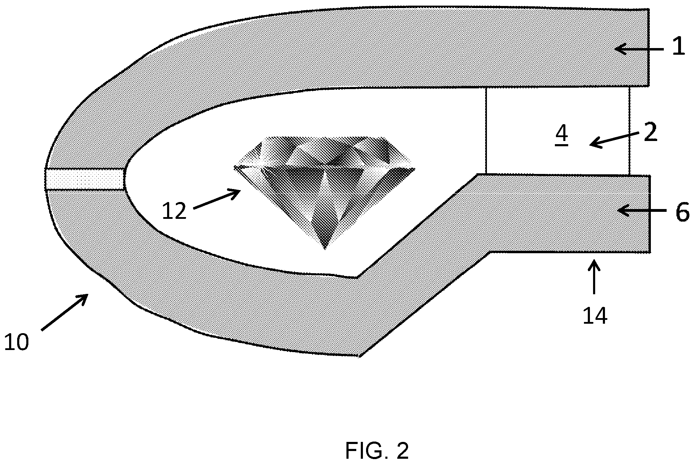

A further aspect is shown in FIG. 2, in which the sealable article is provided with a folding sealable flap 14, formed for example, from the end of polymer film 6. In one embodiment, sealable flap 14 may be constructed to fold over the end of one of films 1 and 6 to seal against the outer side of the other of films 1 and 6. This may result in an alternative placement of the adhesive strip 2 and release film 5, that is, the adhesive strip 2 and release film 5 would be placed on an outer film side of one of films 1 and 6 that faces the folded over inside portion of sealable flap 14, which would be attached to the other of films 1 and 6.

FIG. 2 further shows an item 12, in this case a jewel, enclosed in space 3 and secured within the sealed article 10. As shown, the release layer 5 has been removed and the films 1 and 6 have been sealed together with the adhesive strip to seal the article 10 and close the opening 8. The adhesive strip 2 containing covert tamper evidencing agent 4 is sealed to the sealable flap 14 with application of pressure to seal the article.

While a single item 12 is shown, it should be understood that more than one item may be sealed within the article 10.

The adhesive seal 2 cannot be pulled apart without causing noticeable damage to one or both of the films 1 and 6 and/or the seal itself. However, one manner in which the adhesive seal could be opened while causing little to no noticeable damage could be through application of a solvent to the outside edge of the adhesive strip 2 between the films 1 and 6. Solvents that could be used for in this manner for tampering include, for instance, aromatic hydrocarbons, terpenes, or ketones. Specific examples of such solvents include acetone, methyl ethyl ketone, toluene, and limonene.

The covert tamper evidencing agents are brightly luminescent under a UV lamp only when they are present in an aggregated form, as is the case when they are mixed into a resin carrier plus adhesive or just into an adhesive. However, since these agents are soluble in common solvents that can be used to chemically attack and weaken the adhesive seal material in order to open the seal of a container, they will substantially lose their luminescence in a tampering attempt, that is, when the agents dissolve in the tampering solvent. Thus, in an example that is not claimed, these agents are preferably organic non-polar aromatic hydrocarbon materials.

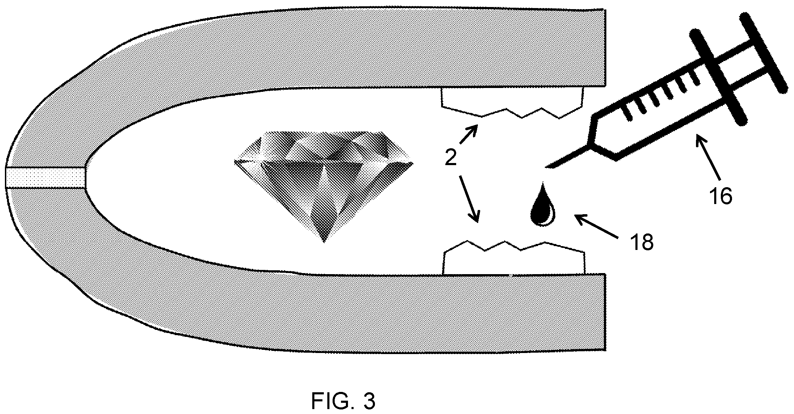

FIG. 3 depicts a sealed article that has been tampered with. As shown, a syringe 16 has been used to apply a solvent 18 that weakens the adhesive bond to the adhesive strip 2, thereby weakening and compromising the integrity of the seal and allowing the seal to be opened. The tamperer can now access to the interior of the article and can remove some or all of the items 12 that had previously been secured inside. After removal, the two sides of the opened adhesive seal can be resealed by pressing the two films together. In this situation, tampering may not be evident when inspected under ordinary conditions, such as under visible light.

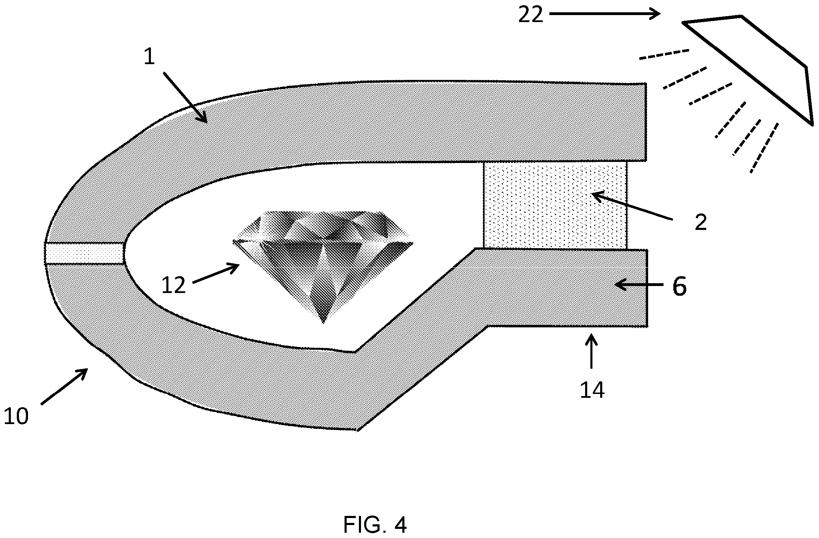

FIG. 4 depicts an inspection of a sealed article 10 to assess whether the seal has been tampered with. The adhesive strip 2 is exposed to UV light from UV light source 22. The inspection shows that the sealed article 10 has not been tampered with, as the covert tamper evidencing agent in the adhesive strip 2 emits light across the entire length of the strip (depicted as a dotted fill in the strip 2).

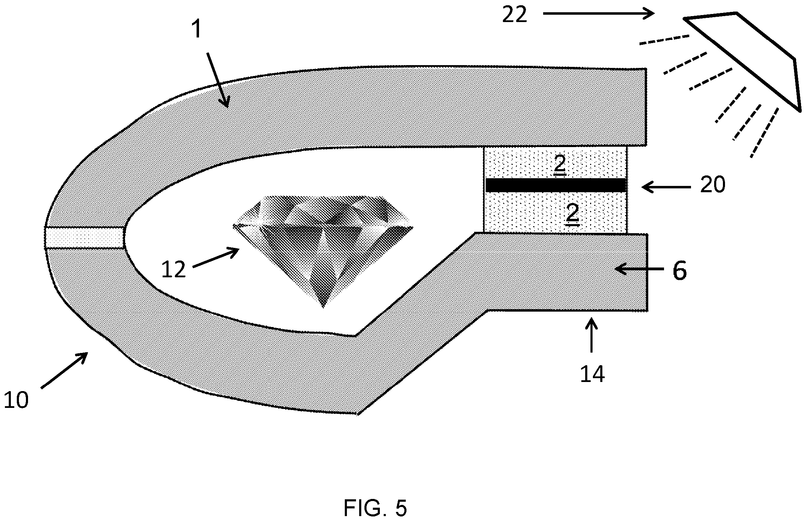

FIG. 5 depicts another inspection of a sealed article 10 to assess whether the seal has been tampered with. The adhesive strip 2 is exposed to UV light from UV light source 22. The inspection shows that the sealed article 10 has been tampered with, as the covert tamper evidencing agent in the adhesive strip 2 does not emit light across the entire length of the strip, or emits light of a diminished luminescence, as shown by darkened region 20, which interrupts the regions of light emitted by the covert tamper evidencing agent (again depicted as a dotted fill in the strip 2).

The covert tamper evidencing agent 4 in the strip may have dissolved in the solvent, which takes the covert tamper evidencing agent out of the aggregated state and thereby not capable of displaying luminogenic activity. The particular covert tamper evidencing agents described herein are capable of dissolving in common solvents, such as those mentioned above, and lose the ability to emit light when viewed under a UV light source.

The covert tamper evidencing agents may be first blended with a resin carrier as described above. The mixture of the resin carrier and covert tamper evidencing agent may then be blended with the molten adhesive. In an example not falling under the scope of the invention, the covert tamper evidencing agent may also be blended directly with the adhesive. The blending may take place in an adhesive melting tank in order to blend the components.

The adhesive containing the covert tamper evidencing agent (and possibly the resin carrier for the covert tamper evidencing agent) may be applied to the substrates that form the sealable articles (e.g., the polymer films) with a pneumatic spray device or by extruding the compositions through a slot or nozzle. In this manner, an adhesive strip can be formed. The adhesive may preferably be introduced into the melter tank in the form of pillows or pellets. Hot melt adhesives in these forms are available from several suppliers, such as for example Henkel Adhesives, H. B. Fuller, or Bostik, Inc. all of whom provide hot melt adhesives that are suitable for inclusion in the sealing compositions described herein.

The covert tamper evidencing agents used herein preferably have melting points higher than the process temperature used for application of the adhesive. A hot melt adhesive might be heated to a temperature of 140-185°C; thus the covert tamper evidencing agents should have melting points that exceed this range It has been observed that when heated above their melting points, AIEgens lose their luminescence (at least temporarily).

As indicated, in one aspect, the covert tamper evidencing agent may be added to the melter tank in the form of a solid or liquid resin concentrate in which the agent has been first mixed with resin carrier before being mixed with the hot melt adhesive. The resin used for this purpose is preferably a petroleum hydrocarbon resin or a natural resin, similar to ingredients contained in the unmodified adhesive and fully compatible with those ingredients.

In one aspect, the resin concentrate can be added to the tank in an amount of about 2 wt% and the adhesive would be added in an amount of about 98wt%. The amount of covert tamper evidencing agent in the adhesive mix would most be in the about 1 wt% or less of the resulting adhesive composition.

According to the invention, when the adhesive sealing material includes a covert tamper evidencing agent in a resin carrier and an adhesive material, the composition of the covert tamper evidencing agent and resin carrier may be about 0.02 wt% to about 10.0 wt%, and preferably about 0.2 wt% to about 5 wt% of the adhesive sealing material, based on the total weight of the adhesive sealing material. Further, in this arrangement, the amount of covert tamper evidencing agent in the adhesive sealing material may be about 0.01 wt% to about 5.0 wt%, preferably about 0.1 wt% to about 2.5 wt%, based on the total weight of the adhesive sealing material

In an example not falling under the scope of the invention, when the adhesive sealing material includes a covert tamper evidencing agent in an adhesive material with no resin carrier, then the amount of covert tamper evidencing agent may be about 0.01 wt % to about 5.0 wt %, and preferably about 0.1 wt % to about 2.5 wt. %, based on the total weight of the adhesive sealing material.

### EXAMPLES

The following examples illustrate specific aspects of the present invention and are not intended to limit the scope thereof in any respect and should not be so construed. The scope of the invention is defined by the appended claims.

Examples 1-7 demonstrate compositions in which covert tamper evidencing agents are mixed into resin carriers. The covert tamper evidencing agents listed in Table 1were dispersed into a liquid or solid resin carrier (also listed in Table 1) to form a concentrate suitable for addition to an adhesive. Suitable commercially available resin carriers for forming concentrates include Hercolyn D^{®} and Staybelite Ester 3^{®}. These are examples of liquid rosin ester resins used in adhesive formulations. Stabelite E^{®}, which may also be used, is an example of a rosin ester which is a solid at room temperature.

Examples 1-5 are liquid paste concentrates that are suitable for inclusion in an adhesive composition. These concentrates were prepared by blending the components listed in Table 1 in a planetary centrifugal mixer at 3000 rpm to form a dispersion of the covert tamper evidencing agent in resin in a liquid paste form.

Examples 6 and 7 represent solid resin dispersions that were prepared by heating solid Staybelite E^{®} resin at a temperature above its softening point and then blending the covert tamper evidencing agents into the liquefied resin by stirring. The resin dispersion was subsequently cooled to room temperature to create solid dispersions.

**Table 1: Resin concentrates (Resin Carrier + Covert Tamper Evidencing Agents)**

| Materials | Inventive Ex. 1 (wt. %) | Inventive Ex. 2 (wt. %) | Inventive Ex. 3 (wt. %) | Inventive Ex. 4 (wt. %) | Inventive Ex. 5 (wt. %) | Inventive Ex. 6 (wt. %) | Inventive Ex. 7 (wt. %) |
|---|---|---|---|---|---|---|---|
| LUNSAB2 (AIEgen) (a) | 25 | --- | --- | --- | 28 | --- | --- |
| Hercolyn D ^{®} (rosin ester) (b) | 75 | 50 | 67 | 60 | --- | --- | --- |
| Staybelite Ester 3 ^{®} (rosin ester) (b) | --- | --- | --- | --- | 72 | --- | --- |
| Staybelite-E ^{®} (hydrogenated rosin / rosin ester) (c) | --- | --- | --- | --- | --- | 50 | 90 |
| 1,1,2,2-Tetraphenylethylene (AIEgen) (d) | --- | 50 | 33 | --- | --- | --- | --- |
| 4,4'-bis(triphenylethenyl)-1,1'biphenyl (AIEgen) (e) | --- | --- | --- | --- | --- | --- | 10 |
| 1,1,2,3,4,5-Hexaphenyl-1H-silole (AIEgen) (e) | --- | --- | --- | --- | --- | 50 | --- |
| 1-(dibenzo [b,d]furan-2-yl) phenylmethanone (organic phosphor) (f) | --- | --- | --- | 40 | --- | --- | --- |
| | | | | | | | |
| Total (wt. %) | 100 | 100 | 100 | 100 | 100 | 100 | 100 |
| Form of Concentrate | Liquid Paste | Liquid Paste | Liquid Paste | Liquid Paste | Liquid Paste | Solid | Solid |
| Luminescent Color | Yellow | Lt. Blue | Lt. Blue | Green | Yellow | Green | Lt. Blue |

| | | | | | | | |
|---|---|---|---|---|---|---|---|
| a.) Product supplied by LuminoChem. b.) Trademarked product supplied by Pinova. c.) Trademarked product supplied by Eastman. d.) Substance supplied by BOC Sciences. e.) Substance supplied by Sigma Aldrich. f.) Known substance, synthesized internally by Sun Chemical. | | | | | | | |

Luminescence was observed by viewing the seal under a UV LED light at 370 nm wavelength.

The above compositions can mixed with an adhesive material in a melter tank at an appropriate temperature, such as mentioned above. The adhesive may be added in the form of adhesive pillows or pellets.

### EXAMPLES OF ADHESIVE COMPOSITIONS

The resin concentrate of Example 1 was blended with Thermogrip 2345 adhesive, supplied by Bostik, in an Altablue 16TT heated mixing tank obtained from Nordsun. The proportion of concentrate added to the tank was 4 wt%, with 1wt% thereof being covert tamper evidencing agent. The remainder was adhesive (i.e., 96wt%).

The molten adhesive was pumped from the tank through a die to apply it to a metallized release strip. The temperature settings used for adhesive application were:
Tank Temperature: 360 °F
Hose Temperature: 365 °F
Die Temperature: 311 °F

The metallized release strip was cut into sections and joined, adhesive side, to printed polyolefin bags to form one half of a secure adhesive seal. TheftGard ^{®} tape was heat sealed to the other side of the bag closure.

TheftGard^{®} tape has security features that are designed to overtly show evidence of seal tampering. This tape has a printed red ink strip along its length which will detach from the substrate if sufficient force is applied to pull the seal apart. TheftGard^{®} also has a thin white strip which is printed with an invisible thermochromic ink. The white strip will change color if heat is applied to the seal to soften the adhesive.

The resulting tamper-evident seal formed from the Example 1 resin concentrate on the bag was sealed closed by peeling off the metallized release strip and applying hand pressure to seal the exposed adhesive strip to the TheftGard^{®} tape. The adhesive seal appeared identical to a non-inventive adhesive seal viewed in normal room lighting conditions. E.g., under natural light, of the visible light wavelengths, the seal could not be observed emitting light.

When a small hand-held battery powered UV-LED flashlight (a SK66 flashlight from Warsun emitting in the UV range at about 370 nm UV light) was used to illuminate the seal, the adhesive seal became brightly luminescent (a yellow color was visible). Another light source, a hand-held UV SurLight UV LED flashlight emitting at a UV wavelength of about 370 nm, was also used. Again, a bright luminescent yellow color was observed. Again, when viewed under light in the visible light range, no color had been observed.

Similar results can be obtained by UV illumination throughout a range of wavelengths capable of exciting covert tamper evidencing agents present in the adhesive strip. Illumination of the adhesive compositions in the UV range of about 365 to about 390 nm has been found to be suitable for observing the emitted light from the seal containing the covert tamper evidencing agents.

The solvent limonene was slowly dripped from a pipette along the outside edge of the adhesive seal composition formed from the Example 1 resin concentrate in order to weaken the sealing bond until a portion of the seal could be gently pulled open. The opening thus formed was of a size sufficient to remove one or more items from a secure bag. Pressure was applied by hand to reseal the tampered with seal. Inspection of the tampered with seal in normal room lighting did not find evidence of ingress.

The tampered with seal was then illuminated with a SK66 flashlight from Warsun emitting in the UV range at about 370 nm. Upon observance of the seal under UV light, a loss of luminescent intensity in the portion of the seal that had been weakened by the solvent was clearly detectable. The loss of luminescent intensity is a deficiency and/or irregularity in the light emitted by the covert tamper evidencing agent in the seal, visible when the seal is exposed to UV light. Thus, covert evidence of tampering was visible when the detector was used.

Examples 2 and 4- 7 were combined with Bostik adhesive in the melter tank of a Champ 3 Hot Melt Glue Gun from Glue Machinery Corporation. The temperature of the melter tank was set using a thermostat. Pressure was applied to extrude the molten adhesive blend through a nozzle for application onto a clear polyolefin sheet material that is suitable for formation of a secure container.

A metallized polymer release film was applied over the adhesive strip that had been applied on the clear sheet. While still warm, the adhesive under the release layer was pressed into a uniform even strip by applying pressure with a hand roller.

After the adhesive strip cooled to room temperature, the release liner was peeled off. The exposed adhesive strip was placed in contact with a strip of TheftGard^{®} tape. Pressure was applied to the adhesive between the sheet layers and seal tap to produce adhesive seal formed from the compositions of Examples 2 and 4-7. The adhesive seals appeared identical to a non-inventive adhesive seal (Comparative Example 1) viewed in normal room lighting conditions. E.g., under natural light, of the visible light wavelengths, the seal could not be observed emitting light.

The adhesive seal formed from the compositions of Examples 2 and 4-7 were brightly luminescent when illuminated with UV light.

After application of solvent to separate the seal, and upon observance of the seal under UV light, a loss of luminescent intensity in the portion of the seal that had been weakened by the solvent was clearly detectable. The loss of luminescent intensity is a deficiency and/or irregularity in the light emitted by the covert tamper evidencing agent in the seal, visible when the seal is exposed to UV light. Thus, covert evidence of tampering was visible when the detector was used. Of note, the TheftGard^{®} tape showed no overt evidence that it had been tampered with. That is, the TheftGard^{®} tape showed no overt evidence of solvent exposure.

Comparative Example 1 is an adhesive sealing material that does not contain a luminescent material. The seal was found to have a faint luminescent purple color when viewed under a UV light. This luminescence seems to be characteristic of native materials used to formulate the adhesive. After solvent exposure, the examination under a UV-light source of the seal of Comparative Example 1 did not reveal evidence of tampering.

### Examples Of Covert Tamper Evidencing Agents In Adhesives

Examples 8 - 14 report the performance of inventive tamper evident seals formed by adding covert tamper evidencing agent directly to molten adhesive in the melter tank of a Champ 3 Hot Melt Glue Gun. In these examples, the same Bostik adhesive of Examples 1-7 was used. Hot molten adhesive was applied to polyolefin film through the nozzle of the glue gun.

Solvent was applied to the seals to weaken them so they could be opened. Once the seam was weakened, gentle force was applied by hand to slowly pull apart the adhesive seals at the location softened by solvent. The adhesive seal was pulled apart approximately halfway across its length in this manner so that the difference between the tampered portion and the untampered portion of the seal could be easily contrasted visually. The solvents that were used included toluene, methyl ethyl ketone (MEK), and limonene.

After the adhesive seal was pulled apart, without showing any overt evidence of tampering on the TheftGard^{®} tape, the two films were resealed at the opening by applying hand pressure to reclose the seal in the region weakened by solvent. The resulting tampered seals of Examples 8-14 and Comparative Example 1 all appeared unchanged when viewed under visible light. The adhesive strip of Comparative Example 1 continued to luminesce a faint purple color under UV light in a continuous manner free of deficiency and irregularity, appearing unchanged, and thus displaying no evidence of tampering. In contrast, Inventive Examples 8-14 all showed changes in luminescence in the adhesive strip when viewed under a UV light, which changes were caused the tampering. Thus, covert evidence of tampering was detectable for the inventive examples.

**Table 2: Examples of Inventive Tamper-Evident Adhesive Seals (with Comparative Example)**

| Materials | Comp. Ex. 1 | Inv. Ex. 8 | Inv. Ex. 9 | Inv. Ex. 10 | Inv. Ex. 11 | Inv. Ex. 12 | Inv. Ex. 13 | Inv. Ex. 14 |
|---|---|---|---|---|---|---|---|---|
| 1,1,2,2-Tetraphenylethylene | --- | 1.00 | --- | --- | --- | --- | --- | 0.5 |
| 4,4'-bis(triphenylethenyl)-1,1'-biphenyl | --- | --- | 0.20 | --- | --- | --- | --- | --- |
| 1,1,2,3,4,5-Hexaphenyl-1H-silole | --- | --- | --- | 0.25 | 1.0 | --- | --- | --- |
| 1-(dibenzo[b,d]furan-2-yl) phenylmethanone | --- | --- | --- | --- | --- | 1.0 | --- | --- |
| LuminoChem LUNSAB2 | --- | --- | --- | --- | --- | --- | 0.50 | 0.5 |
| Seal Appearance under Room Lighting | clear colorless | clear colorless | clear colorless | clear colorless | clear colorless | clear colorless | clear colorless | clear colorless |
| under UV Lighting | purple | lt. blue | lt. blue | lt. green | lt. green | lt. blue | yellow | white |
| Solvent used to Open Seal | toluene | toluene | toluene | MEK | limonene | MEK | toluene | toluene |
| After Open /Reseal under Room Lighting | clear colorless | clear colorless | clear colorless | clear colorless | clear colorless | clear colorless | clear colorless | clear colorless |
| After Open /Reseal under UV Lighting | purple | black / lt. blue specs | black / lt. blue specs | black / lt. green specs | mottled lt. green | mottled lt. blue | mottled dark yellow | mottled black white |
| Tampering | not evident | very evident | very evident | very evident | evident | evident | very evident | very evident |

The inventive examples demonstrate that covert evidence of tampering could be observed by using several different covert tamper evidencing agent in adhesives. These different agents luminesced in a range of different wavelengths in adhesives, including blue, green, and yellow. This is a notable improvement over the state of the art. With Inventive Example 14, a mixing of agents produced a tamper evident seal that emits a white color when viewed under UV light. The ability to vary the color of the luminescence of the seal by mixing agents further adds to the security of the seal, since the specific color and solvent sensitivity of the adhesive should be difficult to for a tamperer to reproduce or duplicate.

## Claims

1. An adhesive sealing material that is configured to provide covert indication that a seal including the adhesive sealing material has been tampered with, comprising:
an adhesive; and
a composition, comprising:
a covert tamper evidencing agent that, when tampered with, covertly reveals tampering, wherein the covert tamper evidencing agent is an aggregation induced emission material; and
a resin carrier for the covert tamper evidencing agent,
wherein the composition is mixed into the adhesive, and wherein the covert indication comprises discontinuities or irregularities in the light emitted by the seal when the seal is exposed to UV light.

2. The adhesive sealing material of claim 1, wherein the aggregation induced emission material is a luminogenic benzazole derivative preferably wherein the luminogenic benzazole derivative is selected from a luminogenic benoxazole compound and a luminogenic benzothiazole compound.

3. The adhesive sealing material of claims 1-2, wherein the covert tamper evidencing agent is selected from 1,1,2,2-tetraphenylethylene, and derivatives thereof; preferably wherein the derivatives are selected from 4,4'-bis(triphenylethenyl)-1,1'-biphenyl, 1,2-bis[4-(azidomethyl)phenyl]-1,2-diphenylethene, 1,2-bis[4-(bromomethyl)phenyl]-1,2-diphenylethene, 1,2-bis(4-methoxyphenyl)-1,2-diphenylethene, [(1,2-diphenylethene-1,2-diyl)bis(4,1-phenylene)]diboronic acid, 4,4'-(1,2-diphenylethene-1,2-diyl)dibenzoic acid, 4,4'-(1,2-diphenylethene-1,2-diyl)diphenol, 1-{4-[1,2-diphenyl-2-(*p*-tolyl)vinyl]phenyl}-1H-pyrrole-2,5-dione, 4,4',4",4‴-(ethene-1,1,2,2-tetrayl)tetraphenol, sodium 3,3'-{[(1,2-diphenylethene-1,2-diyl)bis(4,1-phenylene)]bis(oxy)}bis(propane-1-sulfonate), and combinations thereof; or wherein the covert tamper evidencing agent comprises a silole selected from 1,1,2,3,4,5-hexaphenyl-1H-silole and 2,5-bis[4-(azidomethyl)phenyl]-1,1-dimethyl-3,4-diphenyl-1*H*-silole; or wherein the covert tamper evidencing agent comprises a compound selected from 10,10',11,11'-tetrahydro- bi-5H-dibenzo[a,d]cycloheptene, tris-(8-hydroxyquinoline)aluminum and combinations thereof.

4. The adhesive sealing material of any one of claims 1-3, wherein the resin carrier comprises a material selected from a liquid rosin ester resin and a solid rosin ester resin and/or wherein the covert tamper evidencing agent is dispersed in the resin carrier.

5. The adhesive sealing material of any one of claims 1-4, wherein the composition comprises 0.02 wt % to about 10.0 wt %, preferably 0.2 wt % to 5 wt. % of the adhesive sealing material, based on the total weight of the adhesive sealing material and/or wherein the amount of covert tamper evidencing agent in the adhesive sealing material is 0.01 wt % to 5.0 wt %, preferably 0.1 wt % to 2.5 wt. %, based on the total weight of the adhesive sealing material.

6. The adhesive sealing material of any one of claims 1-5, wherein the adhesive is a pressure sensitive adhesive material.

7. The adhesive composition of claim 6, wherein the covert tamper evidencing agent is dispersed in the adhesive carrier and/or wherein the amount of covert tamper evidencing agent in the adhesive carrier is about 0.01 wt % to about 5.0 wt %, preferably about 0.1 wt % to about 2.5 wt. %, based on the total weight of the adhesive sealing material.

8. A sealable article for holding an item, comprising:
an enclosure having an opening; and
the adhesive sealing material of any one of claims 1-7;
wherein the adhesive sealing material is located in the opening of the enclosure.

9. The sealable article for holding an item of claim 8, wherein the enclosure is comprised of two sheets of film that are sealable together, and wherein the adhesive sealing material is present on at least one of the two sheets of film in the opening of the enclosure and/or wherein the enclosure further comprises a flap and/or further comprising a release film positioned on the adhesive sealing material and/or wherein the adhesive sealing material forms a seal between the two sheets of film, whereby the sealable article is in a sealed state.

10. A method of determining whether a seal of a sealed article has been tampered with, comprising the steps of:
exciting a covert tamper evidencing agent in a seal of a sealed article to emit light, the exciting comprising exposing the seal to UV light, the seal being comprised of the adhesive sealing material of any one of claims 1-7;
inspecting the light emitted by the exposed seal for one or more indications that the sealed article has been tampered with, wherein the one or more indications are discontinuities or irregularities in the light emitted by the seal.

## Patentansprüche

1. Klebeversiegelungsmaterial, das ausgestaltet ist, um verdeckte Angabe bereitzustellen, dass eine Versiegelung, die das Klebeversiegelungsmaterial einschließt, manipuliert worden ist, umfassend:
einen Klebstoff; und
eine Zusammensetzung, umfassend:
ein verdecktes Manipulationsnachweismittel, das, wenn es manipuliert wurde, Manipulation verdeckt offenlegt, wobei das verdeckte Manipulationsnachweismittel ein aggregationsinduziertes Emissionsmaterial ist; und
einen Harzträger für das verdeckte Manipulationsnachweismittel,
wobei die Zusammensetzung in den Klebstoff gemischt wird, und wobei die verdeckte Angabe Diskontinuitäten oder Unregelmäßigkeiten in dem Licht umfasst, das von der Versiegelung emittiert wird, wenn die Versiegelung UV-Licht ausgesetzt wird.

2. Klebeversiegelungsmaterial nach Anspruch 1, wobei das aggregationsinduzierte Emissionsmaterial ein luminogenes Benzazolderivat ist, wobei das luminogene Benzazolderivat vorzugsweise ausgewählt ist aus einer luminogenen Benzoxazolverbindung und einer luminogenen Benzothiazolverbindung.

3. Klebeversiegelungsmaterial nach Ansprüchen 1-2, wobei das verdeckte Manipulationsnachweismittel ausgewählt ist aus 1,1,2,2-Tetraphenylethylen und Derivaten davon; wobei vorzugsweise die Derivate ausgewählt sind aus 4,4'-Bis(triphenylethenyl)-1,1'-biphenyl, 1,2-Bis[4-(azidomethyl)phenyl]-1,2-diphenylethen, 1,2-Bis[4-(brommethyl)phenyl]-1,2-diphenylethen, 1,2-Bis(4-methoxyphenyl)-1,2-diphenylethen, [(1,2-Diphenylethen-1,2-diyl)bis(4,1-phenylen)]diboronsäure, 4,4'-(1,2-Diphenylethen-1,2-diyl)dibenzoesäure, 4,4'-(1,2-Diphenylethen-1,2-diyl)diphenol, 1-{4-[1,2-Diphenyl-2-(p-tolyl)vinyl]phenyl}-1*H*-pyrrol-2,5-dion, 4,4',4",4‴-(Ethen-1,1,2,2-tetrayl)tetraphenol, Natrium-3,3'-{[(1,2-diphenylethen-1,2-diyl)bis(4,1-phenylen)]bis(oxy)}bis(propan-1-sulfonat) und Kombinationen davon; oder wobei das verdeckte Manipulationsnachweismittel ein Silol ausgewählt aus 1,1,2,3,4,5-Hexaphenyl-1H-silol und 2,5-Bis[4-(azidomethyl)phenyl]-1,1-dimethyl-3,4-diphenyl-1*H*-silol umfasst; oder wobei das verdeckte Manipulationsnachweismittel eine Verbindung ausgewählt aus 10,10',11,11'-Tetrahydro-bi-5H-dibenzo[a,d]cyclohepten, Tris-(8-hydroxychinolin)aluminium und Kombinationen davon umfasst.

4. Klebeversiegelungsmaterial nach einem der Ansprüche 1-3, wobei der Harzträger ein Material ausgewählt aus einem flüssigen Baumharzesterharz und einem festen Baumharzesterharz umfasst, und/oder wobei das verdeckte Manipulationsnachweismittel in dem Harzträger dispergiert ist.

5. Klebeversiegelungsmaterial nach einem der Ansprüche 1-4, wobei die Zusammensetzung 0,02 Gew.-% bis etwa 10,0 Gew.-%, vorzugsweise 0,2 Gew.-% bis 5 Gew.-% des Klebeversiegelungsmaterials umfasst, bezogen auf das Gesamtgewicht des Klebeversiegelungsmaterials, und/oder wobei die Menge des verdeckten Manipulationsnachweismittels in dem Klebeversiegelungsmaterial 0,01 Gew.-% bis 5,0 Gew.-%, vorzugsweise 0,1 Gew.-% bis 2,5 Gew.-% beträgt, bezogen auf das Gesamtgewicht des Klebeversiegelungsmaterials.

6. Klebeversiegelungsmaterial nach einem der Ansprüche 1-5, wobei der Klebstoff ein Haftklebstoffmaterial ist.

7. Klebstoffzusammensetzung nach Anspruch 6, wobei das verdeckte Manipulationsnachweismittel in dem Klebstoffträger dispergiert ist und/oder wobei die Menge an verdecktem Manipulationsnachweismittel in dem Klebstoffträger etwa 0,01 Gew.-% bis etwa 5,0 Gew.-%, vorzugsweise etwa 0,1 Gew.-% bis etwa 2,5 Gew.-% beträgt, bezogen auf das Gesamtgewicht des Klebeversiegelungsmaterials.

8. Versiegelbarer Artikel zum Enthalten eines Gegenstands, umfassend:
eine Umhüllung mit einer Öffnung; und
das Klebeversiegelungsmaterial nach einem der Ansprüche 1-7;
wobei das Klebeversiegelungsmaterial sich in der Öffnung der Umhüllung befindet.

9. Versiegelbarer Artikel zum Enthalten eines Gegenstands nach Anspruch 8, wobei die Umhüllung aus zwei Filmlagen zusammengesetzt ist, die miteinander versiegelbar sind, und wobei das Klebeversiegelungsmaterial auf mindestens einer der zwei Filmlagen in der Öffnung der Umhüllung vorhanden ist, und/oder wobei die Umhüllung des Weiteren eine Lasche umfasst und/oder des Weiteren einen Trennfilm umfasst, der auf dem Klebeversiegelungsmaterial positioniert ist, und/oder wobei das Klebeversiegelungsmaterial eine Versiegelung zwischen den zwei Filmlagen bildet, wodurch der versiegelbare Artikel in einem versiegelten Zustand ist.

10. Verfahren zum Bestimmen, ob eine Versiegelung eines versiegelten Artikels manipuliert worden ist, umfassend die Schritte:
Anregen eines verdeckten Manipulationsnachweismittels in einer Versiegelung eines versiegelten Artikels, um Licht zu emittieren, wobei die Anregung umfasst, dass die Versiegelung UV-Licht ausgesetzt wird, wobei die Versiegelung aus dem Klebeversiegelungsmaterial nach einem der Ansprüche 1-7 zusammengesetzt ist;
Inspizieren des durch die ausgesetzte Versiegelung emittierten Lichts auf eine oder mehrere Angaben, dass der versiegelte Artikel manipuliert worden ist, wobei die eine oder mehreren Angaben Diskontinuitäten oder Unregelmäßigkeiten in dem durch die Versiegelung emittierten Licht sind.

## Revendications

1. Matériau d'étanchéité adhésif configuré pour fournir une indication cachée qu'un joint d'étanchéité comprenant le matériau d'étanchéité adhésif a été altéré, comprenant :
un adhésif ; et
une composition, comprenant :
un agent d'inviolabilité caché qui, lorsqu'il est altéré, révèle secrètement l'altération, dans lequel l'agent d'inviolabilité caché est une matière d'émission induite par agrégation ; et
un support de résine pour l'agent d'inviolabilité caché, la composition étant mélangée dans l'adhésif, et l'indication cachée comprenant des discontinuités ou des irrégularités dans la lumière émise par le joint d'étanchéité lorsque celui-ci est exposé à de la lumière UV.

2. Matériau d'étanchéité adhésif selon la revendication 1, dans lequel la matière d'émission induite par agrégation est un dérivé de benzazole luminogène, de préférence dans lequel le dérivé de benzazole luminogène est choisi parmi un composé de bénoxazole luminogène et un composé de benzothiazole luminogène.

3. Matériau d'étanchéité adhésif selon les revendications 1 et 2, dans lequel l'agent d'inviolabilité caché est choisi parmi le 1,1,2,2-tétraphényléthylène et ses dérivés ; de préférence dans lequel les dérivés sont choisis parmi le 4,4'-bis(triphényléthényl)-1,1'-biphényle, le 1,2-bis[4-(azidométhyl)phényl]-1,2-diphényléthène, le 1,2-bis[4-(bromométhyl)phényl]-1,2-diphényléthène, le 1,2-bis(4-méthoxyphényl)-1,2-diphényléthène, l'acide [(1,2-diphényléthène-1,2-diyl)bis(4,1-phénylène)]diboronique, l'acide 4,4'-(1,2-diphényléthène-1,2-diyl)dibenzoïque, le 4,4'-(1,2-diphényléthène-1,2-diyl)diphénol, le 1-{4-[1,2-diphényl-2-(p-tolyl)vinyl]phényl}-1H-pyrrole-2,5-dione, le 4,4',4",4‴-(éthène-1,1,2,2-tétrayl)tétraphénol, le 3,3'-{[(1,2-diphényléthène-1,2-diyl)bis(4,1-phénylène)]bis(oxy) }bis(propane-1-sulfonate) de sodium, et leurs combinaisons ; ou dans lequel l'agent d'inviolabilité caché comprend un silole choisi parmi le 1,1,2,3,4,5-hexaphényl-1H-silole et le 2,5-bis[4-(azidométhyl)phényl]-1,1-diméthyl-3,4-diphényl-1*H*-silole ; ou dans lequel l'agent d'inviolabilité caché comprend un composé choisi parmi le 10,10',11,11'-tétrahydro-bi-5H-dibenzo[a,d]cycloheptène, le tris-(8-hydroxyquinoléine)aluminium et des combinaisons de ceux-ci .

4. Matériau d'étanchéité adhésif selon l'une quelconque des revendications 1 à 3, dans lequel le support de résine comprend un matériau choisi parmi une résine d'ester de rosine liquide et une résine d'ester de rosine solide et/ou dans lequel l'agent d'inviolabilité caché est dispersé dans le support de résine.

5. Matériau d'étanchéité adhésif selon l'une quelconque des revendications 1 à 4, dans lequel la composition comprend de 0,02 % en poids à environ 10,0 % en poids, de préférence de 0,2 % en poids à 5 % en poids du matériau d'étanchéité adhésif, par rapport au poids total du matériau d'étanchéité adhésif et/ou dans lequel la quantité d'agent d'inviolabilité caché dans le matériau d'étanchéité adhésif est comprise entre 0,01 % en poids et 5,0 % en poids, de préférence entre 0,1 % en poids et 2,5 % en poids, par rapport au poids total du matériau d'étanchéité adhésif.

6. Matériau d'étanchéité adhésif selon l'une quelconque des revendications 1 à 5, dans lequel l'adhésif est un matériau adhésif sensible à la pression.

7. Composition adhésive selon la revendication 6, dans laquelle l'agent d'inviolabilité caché est dispersé dans le support adhésif et/ou dans laquelle la quantité d'agent d'inviolabilité caché dans le support adhésif est d'environ 0,01 % en poids à environ 5,0 % en poids, de préférence d'environ 0,1 % en poids à environ 2,5 % en poids, par rapport au poids total du matériau d'étanchéité adhésif.

8. Article scellable destiné à contenir un objet, comprenant :
une enceinte ayant une ouverture ; et
le matériau d'étanchéité adhésif selon l'une quelconque des revendications 1 à 7 ;
le matériau d'étanchéité adhésif étant situé dans l'ouverture de l'enceinte.

9. Article scellable destiné à contenir un objet selon la revendication 8, dans lequel l'enceinte est composée de deux feuilles de film qui peuvent être scellées ensemble, et dans lequel le matériau d'étanchéité adhésif est présent sur au moins une des deux feuilles de film dans l'ouverture de l'enceinte et/ou dans lequel l'enceinte comprend en outre un rabat et/ou comprenant en outre un film de libération positionné sur le matériau d'étanchéité adhésif et/ou dans lequel le matériau d'étanchéité adhésif forme un joint d'étanchéité entre les deux feuilles de film, l'article scellable étant dans un état scellé.

10. Procédé pour déterminer si un joint d'étanchéité d'un article scellé a été altéré, comprenant les étapes de :
excitation d'un agent d'inviolabilité caché dans un joint d'étanchéité d'un article scellé pour émettre de la lumière, l'excitation comprenant l'exposition du joint d'étanchéité à de la lumière UV, le joint d'étanchéité étant composé du matériau d'étanchéité adhésif selon l'une quelconque des revendications 1 à 7 ;
l'inspection de la lumière émise par le joint d'étanchéité exposé pour détecter une ou plusieurs indications indiquant que l'article scellé a été altéré, ladite ou lesdites indications étant des discontinuités ou des irrégularités dans la lumière émise par le joint d'étanchéité.
